# EUROPEAN PATENT SPECIFICATION

(11) **EP 3 818 795 B1**
(45) Date of publication and mention of the grant of the patent: **19.07.2023**
(21) Application number: 20151515.2
(22) Date of filing: 13.01.2020
(51) Int. Cl.: A01B 49/06, A01C 7/20, A01C 9/00, A01B 13/02

(54) **PLANTER**
PFLANZMASCHINE
PLANTEUSE

(30) Priority: 06.11.2019 EP 19020619
(43) Date of publication of application: 12.05.2021
(73) Proprietor: Dewulf B.V., 8331 XA Winsum (NL)
(72) Inventor: ROZEMA, Bart-Jan, 9861 AR Grootegast (NL); VAN ISEGHEM, Joeri, 8770 Ingelmunster (BE); MEINDERTSMA, Siebe, 9172 NZ Ferwert (NL)
(74) Representative: Hostens, Veerle

(56) References cited:
- EP-A1- 2 158 800
- EP-A1- 3 391 722
- NL-C2- 1 020 747

## Description

The invention relates to a planter, for planting seedlings such as potatoes or other tuberous or bulbous plants in a field, while the planter is moving along a direction of travel over this field, comprising:
- a frame;
- an accessories beam, which mainly extends obliquely to the direction of travel, onto which at least one furrow opener is mounted and which is mounted rotatable with respect to the frame, around a first beam rotation axis parallel to the direction of travel; and
- a surface-following component, such as a ridging component, which in the direction of travel is positioned behind the furrow opener.

Such a planter is usually attached to or towed behind the rear of a tractor. It comprises furrow openers for forming furrows in the ground, in which the seedlings are distributed at required planting distance along the furrow. The furrow is thereafter filled with soil and seedlings are covered.

The surface-following component is typically a ridging component, with which the shape of the ridges above the furrows is further made. Such a ridging component can be realized with at least one ridging hood, covering disc, ridging plough or cage roller, etc. Instead of or additionally to the ridging component, such a planter can also be provided with another surface-following component, such as e.g. at least one wheel or roller, etc.

In order to be able to plant seedlings in a satisfactory manner, it is important for the furrows which have been formed to always be of virtually the same depth along their entire length. The reason for this is that it is desirable for the seedlings to be planted evenly and thus for each seedling to be planted at virtually the same depth. Therefore, it is important for the furrow opener to follow the piece of land and consequently also the slope of the piece of land as well as possible.

In NL 1 042 348 B1, different types of belt planters are described, with a frame which can be positioned level, while an accessories beam is rotatable with respect to the frame, around a beam rotation axis parallel to the direction of travel. As the accessories beam and thus the furrow opener is arranged so as to be hingeable with respect to the frame around a beam rotation axis parallel to the direction of travel, it is possible to adjust the position of the furrow opener on the basis of the slope of the piece of land, even after the belt bed has been positioned at a smaller angle than the piece of land or even level. Thus, variation of the depth of the furrows which have been formed is limited in this case.

This accessories beam is supported with wheels, in order for the furrow openers and the ridging component to follow the slope of the surface of the piece of land/field on which the planters travel.

A disadvantage of these wheels is however that they may sink into the ground, such that the furrow openers do not follow the surface evenly or so that the depth of the seedlings differs at planting.

Documents EP2158800, EP3391722 and NL1020747C disclose different planters for planting seedlings such as potatoes or other tuberous or bulbous plants in a field.

It is an object of the current invention to provide alternative means for avoiding unwanted slopes or heights of the accessories beam.

This object is achieved by providing a planter, for planting seedlings such as potatoes or other tuberous or bulbous plants in a field, while the planter is moving along a direction of travel over this field, comprising:
- a frame;
- an accessories beam, which mainly extends obliquely to the direction of travel, onto which at least one furrow opener is mounted and which is mounted rotatable with respect to the frame, around a first beam rotation axis parallel to the direction of travel;
- a surface-following component, which in the direction of travel is positioned behind the furrow opener, and is mounted to the accessories beam by means of at least two balance arms, wherein each balance arm is mounted rotatable with respect to the accessories beam around a first arm rotation axis and mounted rotatable with respect to the surface-following component around a second arm rotation axis; and
- levelling means for levelling the surface-following component and the accessories beam with respect to each other.

As the surface-following component is not fixedly attached to the accessories beam, but by means of balance arms which are both rotatable with respect to the accessories beam and to said surface-following component, a tilting of the accessories beam will not automatically cause the surface-following component to tilt and vice versa. A pit in the ground or a stone can cause the accessories beam to be tilted while the ridging component is not tilted. A pit in the ground or a stone can cause the surface-following component to be tilted while the accessories beam is not tilted.

Thanks to the levelling means, the surface-following component and the accessories beam can be levelled with respect to each other as desired.

In a preferred embodiment, the levelling means comprise a connecting arm, with which the balance arms are mutually connected. The connecting arm and balance arms then together form a wobble shaft. This wobble shaft is mounted rotatable to the accessories beam and rotatable to the surface-following component.

The connecting arm is preferably mounted rotatable to the accessories beam in order to mount the balance arms rotatable to the accessories beam.

Alternatively, the connecting arm can e.g. be mounted rotatable to the surface-following component in order to mount the balance arms rotatable to the surface-following component.

Thanks to such connecting arm, it is prevented that when the surface-following component is tilted, one of the balance arms will go up, while the other of the balance arms goes down. The fixed construction of the balance arms and the connecting arm causes the accessories beam to hinge until the accessories beam gets the same slope as the surface-following component. The fixed construction assures that the accessories beam and the surface-following component are held as parallel as possible.

With a pit in the ground or a stone, it is still possible to get a slight slope between the accessories beam and the surface-following component because the fixed construction of the balance arms and the connecting arm takes up a torsion in the connecting arm. The connecting arm will be deformed elastically in order eventually not to have any torsion in the end, so that the accessories beam will once again be parallel to the surface-following component.

The first beam rotation axis may always assume the same position. However, embodiments are also possible in which the first beam rotation axis is arranged so as to be horizontally and/or vertically displaceable. This first beam rotation axis may be a physical shaft, but may also be an imaginary axis, in which case the accessories beam, due to the specific suspension thereof, is hingeable around an axis which deviates from the suspension points thereof. Said first beam rotation axis is preferably arranged in a fixed position. Still more preferably, this first beam rotation axis is arranged centrally with respect to the accessories beam.

In a particular embodiment, the frame is mounted in a planter according to the invention, rotatable along a frame rotation axis parallel to the direction or travel. The planter then preferably comprises first measurement means for determining the slope of the field with respect to a spirit level and frame control means for rotating the frame around the frame rotation axis on the basis of the slope determined by the first measurement means.

These first measurement means may e.g. include one or more of the following sensors:
- an inclination sensor for determining the angular rotation of the frame in relation to a spirit level;
- an inclination sensor for determining the angular rotation of a transport component of the planter in relation to a spirit level, with the transport component being a part of the planter for supporting the frame and for displacing the frame according to the direction of travel;
- an angle sensor for determining the angular rotation of the frame in relation to the transport element;
- a pressure sensor which is part of a hydraulic cylinder with which the frame is suspended in the planter;
- etc.

With a said frame rotation axis, first measurement means and frame control means, it is always possible to position the frame virtually horizontally (level) in case planting has to be carried out on sloping pieces of land and/or uneven terrain.

When the frame is not positioned horizontally and the planter is moved on a sloping surface, the frame will follow the slope of the surface. In case of a sloping field, this means that the frame will be inclined in relation to the spirit level. Seedlings are dropped from a planting unit in the frame, such as a cup elevator or a belt bed or such, into furrows formed with the furrow openers. When the frame is tilted in relation to the spirit level, the seedlings fall into the furrows less accurately or not at all. Controlling the position of the frame can solve this problem.

As the frame can now be hinged around said frame rotation axis, and because the planter comprises first measurement means for determining the slope of the field with respect to a spirit level and frame control means for rotating the frame around the frame rotation axis on the basis of the slope determined by the first measurement means, it is possible to regulate the position of the frame in relation to the spirit level in such a way that the seedlings fall into the furrows well. The position of the frame can be regulated in relation to the spirit level with the aid of the frame control means. For example, the frame can be placed almost horizontally or at least less inclined in relation to the spirit level. The planting unit can therefore be aligned horizontally here, if desired. As a result thereof, it is possible to ensure that the seedlings fall closer to the centre of the furrows which have been formed.

As the planting unit has a certain weight and the seedlings are placed in this planting unit, the total weight of the feed device during use is high. Because it is then possible to place this planting unit horizontally, or at least less inclined in relation to the spirit level, this improves the stability of the entire planter. A good stability of the planter also means that the planter can move with a certain speed over the field during planting. Often the planting unit is a large part of the planting machine. In this way, most of the planter can remain horizontal, even when planting on a sloping terrain.

An additional advantage that is obtained here because the frame can be placed less inclined in relation to the spirit level or can be placed level, is that the planting unit can perform its function better. When feeding the seedlings to a furrow, it is important that they end up one by one in the furrow and always at the desired distance from each other. For this purpose, the planting unit includes certain elements, such as a string bed or cups, which take care of the singulation of the seedlings. When the planting unit is tilted, it does not run as smoothly and one furrow may receive more seedlings than another.

The said frame rotation axis may always be situated in the same position. However, embodiments are also possible in which the frame rotation axis is arranged so as to be horizontally and/or vertically displaceable. This frame rotation axis may be a physical shaft, but may also be an imaginary axis, in which case the frame, due to the specific suspension thereof, is hingeable around an axis which deviates from the suspension points thereof. Said frame rotation axis is preferably arranged in a fixed position. Even more preferably, the frame rotation axis is arranged centrally. Still more preferably, the frame rotation axis then coincides with the beam rotation axis.

The frame control means preferably comprise one or more actuators. The one or more actuators may be, e.g. one or more third hydraulic cylinders. Thus, the actuators may comprise e.g. two third hydraulic cylinders which are arranged on either side of the frame rotation axis.

The accessories beam is in a preferred embodiment mounted at an adjustable height with respect to the frame.

Even more preferred, the planter then comprises second measurement means for determining the height difference between the surface-following component and the accessories beam and the planter furthermore comprises beam control means for controlling the height of the accessories beam with respect to the frame on the basis of the height difference determined by the second measurement means.

The second measurement means can e.g. comprise a sensor that measures the angle between a balance arm and the surface-following component or it can comprise a sensor that measures the angle between a balance arm and the accessories beam. The measured angle is then used as a measure for setting the height difference. Alternatively an ultrasonic sensor can be mounted on the accessories beam to measure the height to the ground.

When the surface-following component goes up, it can be assured by means of the second measurement means and the beam control means that the accessories beam goes up. The beam control means can thus be programmed accordingly.

The beam control means are preferably programmed in order to keep the height difference constant while planting seedlings. If the second measurement means then measure e.g. an angle other than the set value, the beam control means are controlled so that the accessories beam is placed higher or lower until the measurement means measure the set value again. Preferably this set value can then be adjusted from a tractor towing the planter or a cabin of the planter itself, e.g. on a screen in said tractor or cabin, so that the planting depth can be adjusted in this way.

As the surface-following component and the accessories beam do not have a fixed connection, it is also possible, for example, to set the surface-following component higher than the accessories beam for lifting it at the end of a row. In this way, greater ground clearance is possible.

The beam control means can thus be programmed that it is possible to raise the accessories beam irrespective of the value measured with the second measurement means and thus irrespective of the position of the surface-following component.

The beam control means can e.g. comprise one or more actuators, which may for example be one or more first hydraulic cylinder.

The accessories beam can e.g. be mounted to the frame by means of a first cylinder, which first cylinder then preferably is part of the beam control means.

This first cylinder is preferably positioned centrally to the accessories beam. Furthermore, the planter preferably comprises a hinge unit, which is mounted rotatable to the accessories beam along the first beam rotation axis, in order to mount the accessories beam rotatable with respect to the frame and the first cylinder is preferably mounted rotatable to this hinge unit along a second beam rotation axis, in order to mount the accessories beam to the frame by means of the first cylinder. This second beam rotation axis then furthermore preferably has a fixed position with respect to the hinge unit. Such hinge unit is preferably made as one single hinge piece, but could also be made up of several pieces.

If only one such first cylinder is used, then the balance arms are preferably interconnected with abovementioned connecting arm.

Otherwise, the beam control means preferably comprise at least two actuators, being e.g. first hydraulic cylinders, which are positioned at a distance from each other. These two actuators then preferably also form part of the levelling means in addition to abovementioned connecting arm, or as an alternative to this connecting arm. With two such actuators and no connecting arm, second measurement means are to be provided, per balance arm, e.g. an angle sensor between a corresponding balance arm and the accessories beam.

In order to connect the connecting arm to the balance arms, this connecting arm can e.g. be bolted, rivetted or welded to the balance arms.

Such connecting arm can take many different forms. This connecting arm can be made as a rod or a tube or a profile, etc. This connecting arm can take a straight form, but can also be bended, or V-shaped, etc.

Balance arms can also take many different forms. These balance arms can be made as rods or tubes or profiles etc.

Preferably, these balance arms are made such that the arm rotation axes are moveable with respect to each other. Each second arm rotation axis can in this respect be provided moveable towards and away from the first arm rotation axis. Alternatively, these balance arms are made such that each first arm rotation axis is moveable towards and away from the second arm rotation axis. It is also possible to provide both arm rotation axes moveable. In this respect these balance arms can e.g. be made telescopically. Alternatively, these balance arms may e.g. be provided with a slotted hole wherein a hinge pin is mounted for realizing the first arm rotation axis or the second arm rotation axis, the hinge pin being moveable in said slotted hole towards and away from the respective other arm rotation axis. Alternatively, such a slotted hole can e.g. be provided in the accessories beam or in the surface-following component.

Each second arm rotation axis being moveable towards and away from the first arm rotation axis allows the surface-following component to tilt forwards or backwards, so that a different height thereof is achieved. This movability further allows to control the height difference between the surface-following component and the accessories beam.

The two said balance arms are furthermore preferably positioned on either side of the first beam rotation axis. Alternatively, the first beam rotation axis could e.g. be positioned at the height of one of the balance arms.

In case the two said balance arms are positioned on either side of the first beam rotation axis and in case the levelling means comprise two said actuators, these actuators are preferably also positioned on either side of the beam rotation axis.

The surface-following component is typically a ridging component, with which the shape of the ridges above the furrows are further made. Such a ridging component can be at least one ridging hood, covering disc, ridging plough or cage roller, etc. Instead of or additionally to the ridging component, such a planter can also be provided with another surface-following component, such as e.g. at least one wheel or roller, etc.

The present invention will now be explained in more detail by means of the following detailed description of a planter according to the present invention. The sole aim of this description is to give explanatory examples and to indicate further advantages and particulars of the present invention, and can thus by no means be interpreted as a limitation of the area of application of the invention or of the patent rights defined in the claims.

In this detailed description, reference numerals are used to refer to the attached drawings, in which:

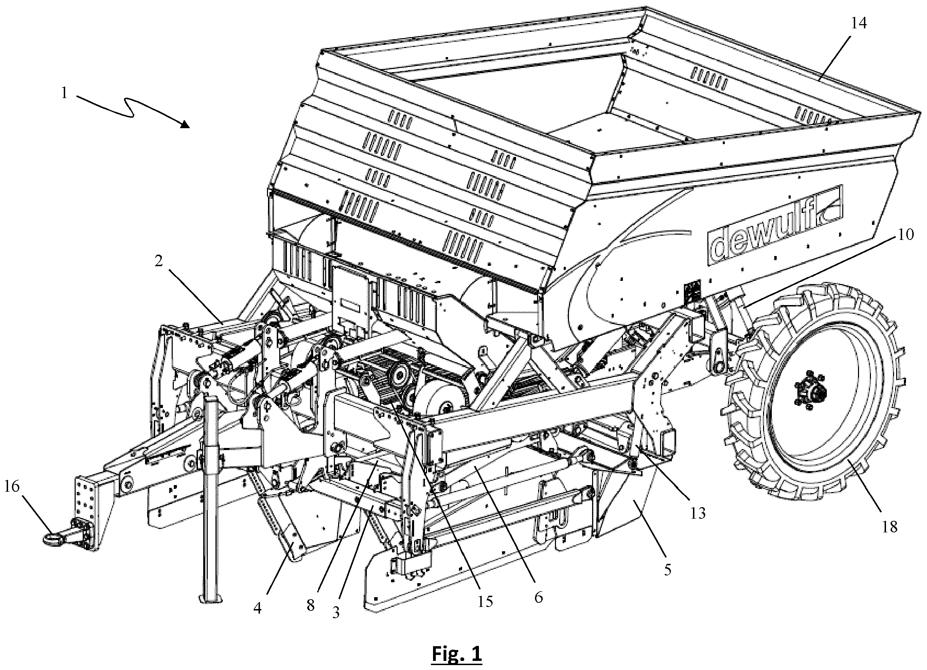

- Fig. 1 shows a belt planter according to the invention in perspective view;
- Fig. 2 shows part of the belt planter of figure 1 in perspective view, in which the storage hopper, belt bed and towing part are removed;
- Fig. 3 shows part of the belt planter of figure 1 in perspective view in order to make the accessories beam, surface-following component, balance arms and connecting arm more visible;
- Fig. 4 shows the balance arms and connecting arm of the belt planter of figure 1 separately in perspective view;

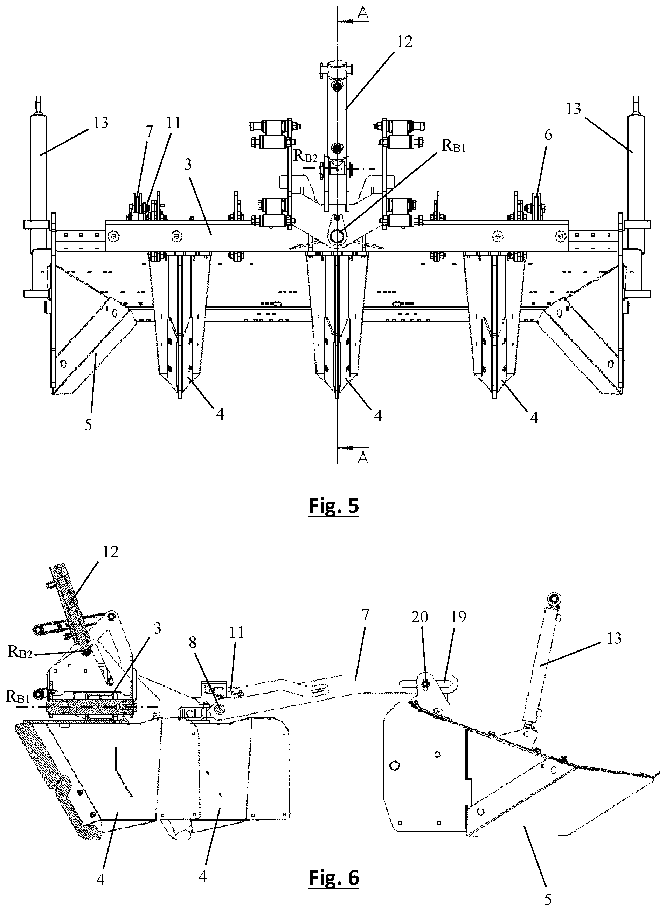

- Fig. 5 shows the part of the belt planter of figure 3 in front view;
- Fig. 6 shows the part of the belt planter of figure 3 in cross section according to AA in figure 5.

The illustrated belt planter (1) is a potato planter (1) which inter alia comprises the following components:
- a storage hopper (14), in which potatoes to be planted are placed;
- a belt bed (15), for dropping potatoes from the storage hopper (14) into furrows;
- a frame (2) which, inter alia, supports the belt bed (15) and the storage hopper (14);
- furrow openers (4) for forming furrows, in which the potatoes are planted;
- an accessories beam (3), onto which the furrow openers (4) are hung;
- a transport component with a rear axle (17) and rear wheels (18) for supporting the frame (2) and for displacing the frame (2) according to a direction of travel (T);
- a towing component (16) for towing the planter (1) by means of e.g. a tractor, which is connected to the frame (2);
- a ridging hood (5), for shaping ridges above the furrows.

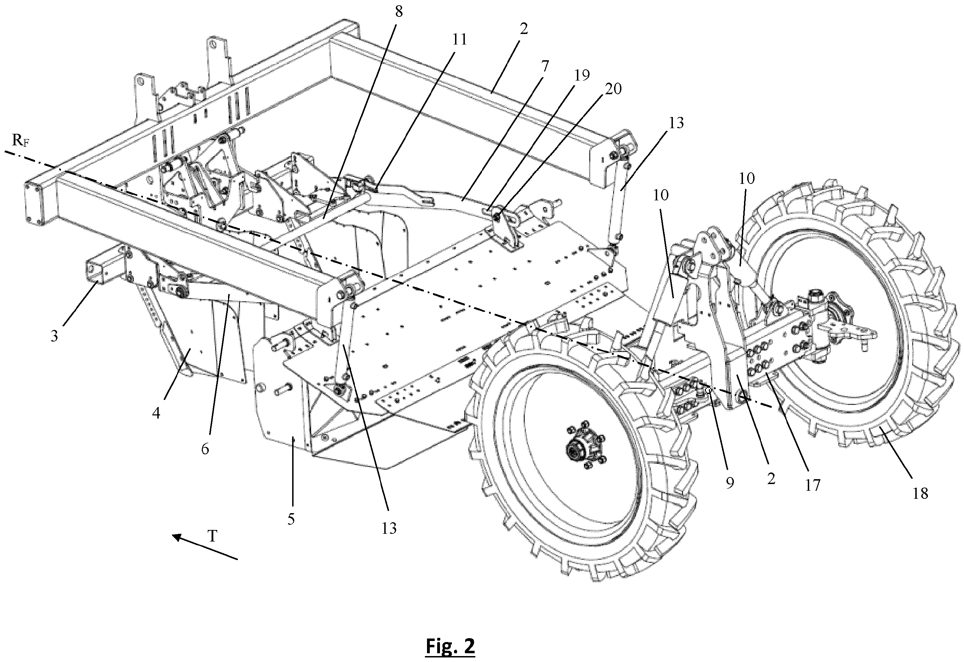

The direction of travel (T) is illustrated with an arrow in figure 2.

The frame (2) is connected to the transport component, so as to be rotatable with respect to this transport component, around a frame rotation axis (R_{F}), which extends along the direction of travel (T) and which is indicated in figure 2.

A first sensor (9) is mounted to the rear axle (17) in order to determine the slope of the field over which the planter (1) travels, with respect to the spirit level. Two third hydraulic cylinders (10) are connected to the frame (2) as frame control means (10) for rotating the frame (2) around the frame rotation axis (R_{F}) on the basis of the slope determined by the first sensor (9).

In addition to the first sensor (9), the third hydraulic cylinders (10) may be controlled on the basis of measurements using one or more of the following sensors: a second slope sensor for determining the slope of the transport component with respect to the spirit level, an angle sensor for determining the angular rotation of the frame with respect to the transport component, a pressure sensor which forms part of a said hydraulic cylinder (10), etc.

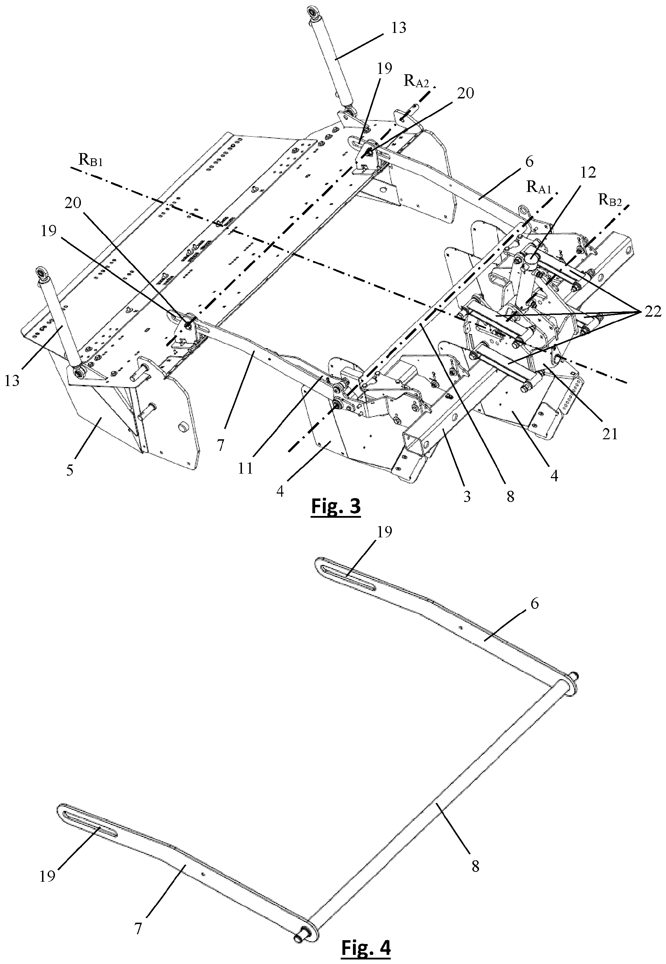

The accessories beam (3) is rotatably mounted in a hinge piece (21). This hinge piece (21) is connected to the frame (2) by means of a parallelogram mechanism (22). In this way, the accessories beam (3) is mounted rotatable with respect to the frame (2), around a first beam rotation axis (R_{B1}), which extends along the direction of travel (T) and which is indicated in figure 3. In the illustrated embodiment, this first beam rotation axis (R_{B1}) coincides with the frame rotation axis (R_{F}). The accessories beam (3) can e.g. follow the slope of a piece of land on which the planter (1) travels while the frame (2) is kept level.

The ridging hood (5) is mounted to the accessories beam (3) by means of a first balance arm (6) and a second balance arm (7), which at one of their ends are interconnected by means of a connecting arm (8). The balance arms (6, 7) and the connecting arm (8) together form a wobble shaft.

The wobble shaft is mounted rotatable around a first arm rotation axis (R_{A1}) with respect to the accessories beam (3) and around a second arm rotation axis (R_{A2}) with respect to the ridging hood (5). This wobble shaft causes the accessories beam (3) to hinge until the accessories beam (3) gets the same slope as the surface-following component (5).

In the illustrated embodiment, the connecting arm (8) is in this respect mounted to the accessories beam (3), rotatable around the first arm rotation axis (R_{A1}), such that the balance arms (6, 7) are mounted rotatable with respect to the accessories beam (3) around this first arm rotation axis (R_{A1}). At their other ends, the balance arms (6, 7) are provided with a slotted hole (19). A bolt (20) is entered to this slotted hole (19) and fixed to the ridging hood (5) such that the balance arms (6, 7) are mounted rotatable with respect to the ridging hood (5) around the second arm rotation axis (R_{A2}), which is defined by the bolts (20).

The connecting arm (8) could alternatively also be mounted rotatable around the second arm rotation axis (R_{A2}) with respect to the ridging hood (5) and the slotted holes (19) could be positioned at the height of the accessories beam (3) in the balance arms (6, 7) in order to mount the wobble shaft rotatable around the first arm rotation axis (R_{A1}) with respect to the accessories beam (3).

The slotted holes (19) could alternatively be provided in the accessories beam (3) or in the ridging hood (5) instead of in the balance arms (6, 7).

By means of the slotted holes (19), the second arm rotation axis (R_{A2}) is moveable towards and away from the first arm rotation axis (R_{A1}), so that the ridging hood (5) can be tilted forwards or backwards, so that a different height thereof is achieved. Instead of providing such slotted holes (19), the balance arms (6, 7) could e.g. be made telescopically.

The accessories beam (3) is furthermore mounted at an adjustable height with respect to the frame (2).

The planter (1) comprises a second sensor (11) for determining the height difference between the surface-following component (5) and the accessories beam (3). A first hydraulic cylinder (12) is at a first end rotatably connected to the hinge piece (21) in order to connect it to the accessories beam (3) and at a second end rotatably connected to the frame (2) for controlling the height of the accessories beam (3) with respect to the frame (2) based on the height difference determined by the second sensor (11). The accessories beam (3) is in this way mounted rotatable along a second beam rotation axis (R_{B2}) with respect to this first hydraulic cylinder (12). This second beam rotation axis (R_{B2}) has a fixed position with respect to the hinge piece (21).

The first hydraulic cylinder (12) can be programmed in order to keep the height difference constant, while planting the seedlings.

In illustrated embodiment, the second sensor (11) is provided for measuring the angle between a balance arm (7) and the accessories beam (3). Alternatively, as second sensor, a sensor could be provided for measuring the angle between a balance arm (6, 7) and the ridging hood (5), or an ultrasonic sensor for measuring the height of the accessories beam (3) with respect to the ground, etc.

Instead of interconnecting the balance arms (6, 7) by means of the connecting arm (8), a second first hydraulic cylinder (12) could be provided at a distance of the mentioned first hydraulic cylinder (12), for levelling the ridging hood (5) and the accessories beam (3) with respect to each other.

Another second sensor (11) is then to be provided, one second sensor (11) per balance arm (6, 7) and per first hydraulic cylinder (12).

The illustrated planter (1) furthermore comprises two second hydraulic cylinders (13) with which the ridging hood (5) is mounted to the frame (2) such that the ridging hood (5) can be lifted with respect to the frame (2) and the slope thereof can be controlled. One second hydraulic cylinder (13) could also suffice instead of two. These second hydraulic cylinders (13) could also be left out. If these cylinders (13) are not available, the ridging hood follows the ground during operation but can no longer be raised for transport on the road or for lifting at the end of a row.

Many further alternatives for the illustrated planter (1) are conceivable.

A belt planter (1) according to the invention is not necessarily such a planter (1) for planting potatoes, but could also be provided for planting seedlings of other tuberous or bulbous plants.

The illustrated planter (1) is provided with a belt bed (15) for dropping potatoes into furrows, but could alternatively e.g. be provided with other planting units, such as e.g. a cup elevator. How seedlings are united from the storage hopper (14) is unimportant for the current invention.

In the illustrated embodiment, 3 furrow openers (4) are provided. The number of rows is however unimportant for the current invention, so that more or less furrow openers (4) could be provided. The invention is particularly advantageous when two or more rows are formed. When e.g. 4 or more rows are formed with 4 furrow openers, it is alternatively possible to have more than one accessories beam.

The illustrated ridging hood (5) forms a said ridging component (5). It is alternatively possible to provide such a ridging component (5) with several ridging hoods (5). Instead of one or more ridging hood (5), or in addition thereto it is also possible to have one or more covering disc, ridging plough or cage roller, etc. in such a ridging component. It is also possible to provide more than one such ridging component (5). Two balance arms (6, 7) are then provided per ridging component (5).

Instead of or in addition to the one or more ridging components (5), such a planter (1) can also be provided with another surface-following component (5), such as e.g at least one wheel or roller, etc.

The rear wheels (18) are in the illustrated embodiments positioned behind the ridging hood (5). It is alternatively also possible to position these rear wheels (18) at the height of or in front of this ridging hood (5).

The accessories beam (3) is in the illustrated embodiment connected to the frame (2) by means of a hinge piece (21) and a parallelogram mechanism (22) in order to prevent the accessories beam (3) from turning left or right. Instead of such a parallelogram mechanism (22), it would also be possible e.g. to provide a linear conductor.

## Claims

1. Planter (1), for planting seedlings such as potatoes or other tuberous or bulbous plants, in a field while the planter (1) is moving along a direction of travel (T) along this field, comprising:
- a frame (2);
- an accessories beam (3), which mainly extends obliquely to the direction of travel (T), onto which at least one furrow opener (4) is mounted and which is mounted rotatable with respect to the frame (2), around a first beam rotation axis (R_{B1}) parallel to the direction of travel (T); and
- a surface-following component (5), which in the direction of travel (T) is positioned behind the furrow opener (4);
wherein, the surface-following component (5) is mounted to the accessories beam (3) by means of at least two balance arms (6, 7), wherein each balance arm (6, 7) is mounted rotatable with respect to the accessories beam (3) around a first arm rotation axis (R_{A1}) and mounted rotatable with respect to the surface-following component (5) around a second arm rotation axis (R_{A2}) and that the planter (1) comprises levelling means for levelling the surface-following component (5) and the accessories beam (3) with respect to each other.

2. Planter (1) according to claim 1, **characterized in that** the levelling means comprise a connecting arm (8) with which the balance arms (6, 7) are mutually connected.

3. Planter (1) according to claim 2, **characterized in that** the connecting arm (8) is mounted rotatable to the accessories beam (3) in order to mount the balance arms (6, 7) rotatable to the accessories beam (3).

4. Planter (1) according to any of the preceding claims, **characterized in that** the frame (2) is mounted in the planter (1) rotatable along a frame rotation axis (R_{F}) parallel to the direction or travel (T), that the planter (1) comprises first measurement means (9) for determining the slope of the field with respect to a spirit level and that the planter (1) comprises frame control means (10) for rotating the frame (2) around the frame rotation axis (R_{F}) on the basis of the slope determined by the first measurement means (9).

5. Planter (1) according to any of the preceding claims, **characterized in that** the accessories beam (3) is mounted at an adjustable height with respect to the frame (2).

6. Planter (1) according to claim 5, **characterized in that** the planter (1) comprises second measurement means (11) for determining the height difference between the surface-following component (5) and the accessories beam (3) and that the planter (1) comprises beam control means (12) for controlling the height of the accessories beam (3) with respect to the frame (2) on the basis of the height difference determined by the second measurement means (11).

7. Planter (1) according to claim 6, **characterized in that** the beam control means (12) are programmed in order to keep the height difference constant while planting the seedlings.

8. Planter (1) according to any of claims 5 to 7, **characterized in that** the accessories beam (3) is mounted to the frame (2) by means of a first cylinder (12).

9. Planter (1) according to claim 6 or 7 and 8, **characterized in that** the first cylinder (12) is part of the beam control means (12).

10. Planter (1) according to claim 8 or 9, **characterized in that** the planter (1) comprises a hinge unit (21) which is mounted rotatable to the accessories beam (3) along the first beam rotation axis (R_{B1}), in order to mount the accessories beam (3) rotatable with respect to the frame (2) and that the first cylinder (12) is mounted rotatable to the hinge unit (21) along a second beam rotation axis (R_{B2}), in order to mount the accessories beam (3) to the frame (2) by means of the first cylinder (12).

11. Planter (1) according to claim 10, **characterized in that** the second beam rotation axis (R_{B2}) has a fixed position with respect to the hinge unit (21).

12. Planter (1) according to any of the preceding claims, **characterized in that** the arm rotation axes (R_{A1,}R_{A2}) are moveable with respect to each other.

13. Planter (1) according to any of the preceding claims, **characterized in that** the balance arms (6, 7) are positioned on either side of the first beam rotation axis (R_{B1}).

14. Planter (1) according to any of the preceding claims, **characterized in that** the surface-following component (5) is a ridging component (5) for forming ridges.

## Patentansprüche

1. Pflanzmaschine (1) zum Pflanzen von Keimlingen wie Kartoffeln oder anderen Knollen- oder Zwiebelpflanzen in einem Feld, während sich die Pflanzmaschine (1) entlang einer Fahrtrichtung (T) entlang des Felds bewegt, Folgendes umfassend:
- einen Rahmen (2);
- einen Anbaugeräteträger (3), der sich hauptsächlich schräg zur Fahrtrichtung (T) erstreckt, an dem mindestens ein Furchenzieher (4) montiert ist und der in Bezug zum Rahmen (2) um eine erste Trägerdrehachse (R_{B1}) parallel zur Fahrtrichtung (T) drehbar ist; und
- eine Oberflächenfolgekomponente (5), die in Fahrtrichtung (T) hinter dem Furchenzieher (4) angeordnet ist;
wobei die Oberflächenfolgekomponente (5) mittels mindestens zweier Ausgleichsarme (6, 7) am Anbaugeräteträger (3) montiert ist, wobei jeder Ausgleichsarm (6, 7) in Bezug zum Anbaugeräteträger (3) um eine erste Armdrehachse (R_{A1}) drehbar montiert ist und in Bezug zur Oberflächenfolgekomponente (5) um eine zweite Armdrehachse (R_{A2}) drehbar montiert ist, und wobei die Pflanzmaschine (1) eine Nivellierungseinrichtung zum Nivellieren der Oberflächenfolgekomponente (5) und des Anbaugeräteträgers (3) zueinander umfasst.

2. Pflanzmaschine (1) nach Anspruch 1, **dadurch gekennzeichnet, dass** die Nivellierungseinrichtung einen Verbindungsarm (8) umfasst, mit dem die Ausgleicharme (6, 7) miteinander verbunden sind.

3. Pflanzmaschine (1) nach Anspruch 2, **dadurch gekennzeichnet, dass** der Verbindungsarm (8) zum Anbaugeräteträger (3) drehbar montiert ist, um die Ausgleichsarme (6, 7) in Bezug zum Anbaugeräteträger (3) drehbar zu montieren.

4. Pflanzmaschine (1) nach einem der vorstehenden Ansprüche, **dadurch gekennzeichnet, dass** der Rahmen (2) in der Pflanzmaschine (1) entlang einer Rahmendrehachse (R_{F}) parallel zur Fahrtrichtung(T) drehbar montiert ist, dass die Pflanzmaschine (1) eine erste Messeinrichtung (9) zum Bestimmen des Gefälles des Felds in Bezug zu einer Libelle umfasst, und dass die Pflanzmaschine (1) eine Rahmensteuereinrichtung (10) zum Drehen des Rahmens (2) um die Rahmendrehachse (R_{F}) auf Grundlage des von der ersten Messeinrichtung (9) bestimmten Gefälles umfasst.

5. Pflanzmaschine (1) nach einem der vorstehenden Ansprüche, **dadurch gekennzeichnet, dass** der Anbaugeräteträger (3) in Bezug zum Rahmen (2) auf einer einstellbaren Höhe montiert ist.

6. Pflanzmaschine (1) nach Anspruch 5, **dadurch gekennzeichnet, dass** die Pflanzmaschine (1) eine zweite Messeinrichtung (11) zum Bestimmen des Höhenunterschieds zwischen der Oberflächenfolgekomponente (5) und dem Anbaugeräteträger (3) umfasst, und dass die Pflanzmaschine (1) eine Trägersteuereinrichtung (12) zum Steuern der Höhe des Anbaugeräteträgers (3) in Bezug zum Rahmen (2) auf Grundlage des von der zweiten Messeinrichtung (11) bestimmten Höhenunterschieds umfasst.

7. Pflanzmaschine (1) nach Anspruch 6, **dadurch gekennzeichnet, dass** die Trägersteuereinrichtung (12) programmiert ist, um den Höhenunterschied während des Pflanzens der Keimlinge konstant zu halten.

8. Pflanzmaschine (1) nach einem der Ansprüche 5 bis 7, **dadurch gekennzeichnet, dass** der Anbaugeräteträger (3) mittels eines ersten Zylinders (12) am Rahmen (2) montiert ist.

9. Pflanzmaschine (1) nach Anspruch 6 oder 7 und 8, **dadurch gekennzeichnet, dass** der erste Zylinder (12) Teil der Trägersteuereinrichtung (12) ist.

10. Pflanzmaschine (1) nach Anspruch 8 oder 9, **dadurch gekennzeichnet, dass** die Pflanzmaschine (1) eine Scharniereinheit (21) umfasst, die in Bezug zum Anbaugeräteträger (3) entlang der ersten Trägerdrehachse (R_{B1}) drehbar montiert ist, um den Anbaugeräteträger (3) in Bezug zum Rahmen (2) drehbar zu montieren, und dass der erste Zylinder (12) entlang einer zweiten Trägerdrehachse (R_{B2}) an der Scharniereinheit (21) drehbar montiert ist, um den Anbaugeräteträger (3) mittels des ersten Zylinders (12) am Rahmen (2) zu montieren.

11. Pflanzmaschine (1) nach Anspruch 10, **dadurch gekennzeichnet, dass** die zweite Trägerdrehachse (R_{B2}) eine fixierte Stellung in Bezug zur Scharniereinheit (21) aufweist.

12. Pflanzmaschine (1) nach einem der vorstehenden Ansprüche, **dadurch gekennzeichnet, dass** die Armdrehachsen (R_{A1}, R_{A2}) zueinander beweglich sind.

13. Pflanzmaschine (1) nach einem der vorstehenden Ansprüche, **dadurch gekennzeichnet, dass** die Ausgleichsarme (6, 7) auf beiden Seiten der ersten Trägerdrehachse (R_{B1}) angeordnet sind.

14. Pflanzmaschine (1) nach einem der vorstehenden Ansprüche, **dadurch gekennzeichnet, dass** die Oberflächenfolgekomponente (5) eine Häufelkomponente (5) zum Ausbilden von Dämmen ist.

## Revendications

1. Planteuse (1), pour la plantation de plants tels que des pommes de terre ou autres plantes à tubercules ou à bulbes dans un champ, tandis que la planteuse (1) se déplace le long d'une direction de déplacement (T) le long de ce champ, comprenant :
- un cadre (2) ;
- une barre à accessoires (3), qui s'étend principalement de manière oblique relativement à la direction de déplacement (T), sur laquelle est installé au moins un traceur de sillon (4) et installée de manière rotative relativement au cadre (2), autour d'un premier axe de rotation de barre (R_{B1}) parallèle à la direction de déplacement (T) ; et
- un composant de suivi de surface (5), qui est placé, dans la direction de déplacement (T), derrière le traceur de sillon (4) ;
le composant de suivi de surface (5) étant installé sur la barre à accessoires (3) au moyen d'au moins deux bras d'équilibre (6, 7), chaque bras d'équilibre (6, 7) étant installé de manière rotative relativement à la barre à accessoires (3) autour d'un premier axe de rotation de bras (R_{A1}) et installé de manière rotative relativement au composant de suivi de surface (5) autour d'un second axe de rotation de bras (R_{A2}) et la planteuse (1) comprenant des moyens d'égalisation de niveau pour égaliser les niveaux du composant de suivi de surface (5) et de la barre à accessoires (3) l'un par rapport à l'autre.

2. Planteuse (1) selon la revendication 1, **caractérisée en ce que** les moyens d'égalisation de niveau comprennent un bras de raccordement (8) avec lequel les bras d'équilibre (6, 7) sont mutuellement raccordés.

3. Planteuse (1) selon la revendication 2, **caractérisée en ce que** le bras de raccordement (8) est installé de manière rotative sur la barre à accessoires (3) afin d'installer les bras d'équilibre (6, 7) de manière rotative sur la barre à accessoires (3).

4. Planteuse (1) selon l'une quelconque des revendications précédentes, **caractérisée en ce que** le cadre (2) est installé dans la planteuse (1) de manière rotative le long d'un axe de rotation de cadre (R_{F}) parallèle à la direction de déplacement (T), **en ce que** la planteuse (1) comprend des premiers moyens de mesure (9) servant à déterminer l'inclinaison du champ par rapport à un niveau à bulle et **en ce que** la planteuse (1) comprend des moyens de commande de cadre (10) servant à faire tourner le cadre (2) autour de l'axe de rotation de cadre (R_{F}) en fonction de l'inclinaison déterminée par les premiers moyens de mesure (9).

5. Planteuse (1) selon l'une quelconque des revendications précédentes, **caractérisée en ce que** la barre à accessoires (3) est installée à une hauteur réglable par rapport au cadre (2).

6. Planteuse (1) selon la revendication 5, **caractérisée en ce que** la planteuse (1) comprend des seconds moyens de mesure (11) servant à déterminer la différence de hauteur entre le composant de suivi de surface (5) et la barre à accessoires (3) et **en ce que** la planteuse (1) comprend des moyens de commande de barre (12) servant à réguler la hauteur de la barre à accessoires (3) relativement au cadre (2) en fonction de la différence de hauteur déterminée par les seconds moyens de mesure (11) .

7. Planteuse (1) selon la revendication 6, **caractérisée en ce que** les moyens de commande de barre (12) sont programmés de façon à maintenir la différence de hauteur constante au cours de la plantation des plants.

8. Planteuse (1) selon l'une quelconque des revendications 5 à 7, **caractérisée en ce que** la barre à accessoires (3) est installée sur le cadre (2) au moyen d'un premier vérin (12).

9. Planteuse (1) selon les revendications 6 ou 7 et 8, **caractérisée en ce que** le premier vérin (12) fait partie des moyens de commande de barre (12).

10. Planteuse (1) selon la revendication 8 ou 9, **caractérisée en ce que** la planteuse (1) comprend une unité d'articulation (21) qui est installée de manière rotative sur la barre à accessoires (3) le long du premier axe de rotation de barre (R_{B1}), afin d'installer la barre à accessoires (3) de manière rotative relativement au cadre (2) et **en ce que** le premier vérin (12) est installé de manière rotative sur l'unité d'articulation (21) le long d'un second axe de rotation de barre (R_{B2}), afin d'installer la barre à accessoires (3) sur le cadre (2) au moyen du premier vérin (12).

11. Planteuse (1) selon la revendication 10, **caractérisée en ce que** le second axe de rotation de barre (R_{B2}) a une position fixe par rapport à l'unité d'articulation (21).

12. Planteuse (1) selon l'une quelconque des revendications précédentes, **caractérisée en ce que** les axes de rotation de bras (R_{A1}, R_{A2}) sont mobiles l'un par rapport à l'autre.

13. Planteuse (1) selon l'une quelconque des revendications précédentes, **caractérisée en ce que** les bras d'équilibre (6, 7) sont placés de chaque côté du premier axe de rotation de barre (R_{B1}).

14. Planteuse (1) selon l'une quelconque des revendications précédentes, **caractérisée en ce que** le composant de suivi de surface (5) est un composant de billonnage (5) servant à former des billons.
